(19) Europäisches Patentamt
European Patent Office
Office européen des brevets

(11) **EP 4 412 023 A1**

(12) **EUROPEAN PATENT APPLICATION**
published in accordance with Art. 153(4) EPC

(43) Date of publication:
**07.08.2024 Bulletin 2024/32**

(21) Application number: **21959226.8**

(22) Date of filing: **28.09.2021**

(51) International Patent Classification (IPC):
***H02J 3/38*** *(2006.01)*     ***H02M 7/48*** *(2007.01)*

(52) Cooperative Patent Classification (CPC):
**H02J 3/38; H02M 7/48**

(86) International application number:
**PCT/JP2021/035558**

(87) International publication number:
**WO 2023/053173 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **IMADA, Noriyuki**
  **Tokyo 100-8310 (JP)**
• **HARIO, Masahiro**
  **Tokyo 100-8310 (JP)**

(74) Representative: **Witte, Weller & Partner**
**Patentanwälte mbB**
**Postfach 10 54 62**
**70047 Stuttgart (DE)**

(54) **POWER CONVERSION DEVICE AND POWER CONVERSION SYSTEM**

(57) A power conversion device (1) includes a self-commutated converter (2) connected to a busbar (18) of an AC circuit (12), and a controller (3) to control an operation of the self-commutated converter (2). The AC circuit (12) includes a first AC system (51) and a second AC system (52) connected to the busbar (18). The controller (3) determines, based on a protection signal for disconnecting the first AC system (51) from the busbar (18) which is transmitted from a protective relay device (61) to protect the first AC system (51), whether the first AC system (51) is disconnected from the busbar (18), and generates an AC voltage command value for the self-commutated converter (2) in accordance with any one of an AC current control scheme and an AC voltage control scheme. When the first AC system (51) is disconnected from the busbar (18), the controller (3) switches a control scheme of the self-commutated converter (2) from the AC current control scheme to the AC voltage control scheme and generates the AC voltage command value in accordance with the AC voltage control scheme.

FIG.1

Processed by Luminess, 75001 PARIS (FR)

**Description**

TECHNICAL FIELD

The present disclosure relates to a power conversion device and a power conversion system.

BACKGROUND ART

Converters applied to a direct-current (DC) power transmission system include line-commutated converters including thyristors for switching elements, and self-commutated converters including elements that can be turned on and off at an appropriate timing, such as insulated gate bipolar transistors (IGBTs), for switching elements. In recent years, the self-commutated converters have been demanded more increasingly than the line-commutated converters.
The self-commutated converter, which is capable of outputting voltage by itself, can be operated in a black start mode for restoring a power system experiencing a power failure, an isolated operation mode, or any other method. In the black start mode and the isolated operation mode, the self-commutated converter is generally controlled by a constant voltage control scheme. In contrast, when operated while being interconnected with a power system, the self-commutated converter is generally controlled by a current control scheme.
Japanese Patent Laying-Open No. 2000-184601 (PTL 1) discloses a system interconnection power supply. In the system interconnection power supply, in the event of a short-circuit fault, an output of the power conversion device is interrupted at high speed by high-speed interruption means for gate-blocking a switching element of a power conversion device, and a circuit breaker inside the power conversion device is interrupted. Then, the power conversion device releases the high-speed interruption means for gate-blocking a switching element and also performs an isolated operation, thereby supplying electric power to a specific load.

CITATION LIST

PATENT LITERATURE

PTL 1: Japanese Patent Laying-Open No. 2000-184601

SUMMARY OF INVENTION

TECHNICAL PROBLEM

In PTL 1, the power conversion device is controlled by the constant-current control scheme in normal operation (e.g., in system interconnection), and in the event of a fault, the switching element of the power conversion device is gate-blocked, thus interrupting power supply from the power conversion device. The power conversion device then releases gate-blocking of the switching element and performs an isolated operation by the constant-voltage control scheme, thus restarting power supply. In PTL 1, power supply from the power conversion device to the load is temporarily interrupted in the event of a fault as described above, making continuous operation difficult.
An object in an aspect of the present disclosure is to provide a technique capable of continuing, in a system in which a large-scale alternating-current (AC) system and a small-scale AC system are connected to a busbar, the operation of the small-scale AC system even when the large-scale AC system is disconnected from the busbar.

SOLUTION TO PROBLEM

According to an embodiment, a power conversion device is provided that performs power conversion between an AC circuit and a DC circuit. The power conversion device includes a self-commutated converter connected to a busbar of the AC circuit, and a controller to control an operation of the self-commutated converter. The AC circuit includes the busbar, and a first AC system and a second AC system connected to the busbar. A converter capacity of the self-commutated converter is greater than a differential capacity between an installed capacity and a load capacity in the second AC system. The controller includes a determination unit to determine, based on a protection signal for disconnecting the first AC system from the busbar which is transmitted from a protective relay device to protect the first AC system, whether the first AC system is disconnected from the busbar, and an AC control unit to generate an AC voltage command value for the self-commutated converter in accordance with any one of an AC current control scheme and an AC voltage control scheme. When the first AC system is disconnected from the busbar, the AC control unit switches a control scheme of the self-commutated converter from the AC current control scheme to the AC voltage control scheme and generates the AC voltage command value in accordance with the AC voltage control scheme.

A power conversion system according to another embodiment includes a power conversion device to perform power conversion between an AC circuit and a DC circuit, and a protective relay device. The power conversion device includes a self-commutated converter connected to a busbar of the AC circuit, and a controller to control an operation of the self-commutated converter. The AC circuit includes the busbar, and a first AC system and a second AC system connected to the busbar. A converter capacity of the self-commutated converter is greater than a differential capacity between an installed capacity and a load capacity in the second AC system. The controller includes a determination unit to determine, based on a protection signal for disconnecting the first AC system from the busbar which is transmitted from a protective relay device to protect the first AC system, whether the first AC system is disconnected from the busbar, and an AC control unit to generate an AC voltage command value for the self-commutated converter in accordance with any one of an AC current control scheme and an AC voltage control scheme. When the first AC system is disconnected from the busbar, the AC control unit switches a control scheme of the self-commutated converter from the AC current control scheme to the AC voltage control scheme and generates the AC voltage command value in accordance with the AC voltage control scheme.

ADVANTAGEOUS EFFECTS OF INVENTION

According to the present disclosure, in a system in which a large-scale AC system and a small-scale AC system are connected to a busbar, the operation of the small-scale AC system can be continued even when the large-scale AC system is disconnected from the busbar.

BRIEF DESCRIPTION OF DRAWINGS

Fig. 1 is a schematic configuration diagram of a power conversion system.
Fig. 2 shows a state of the power conversion system according to one aspect.
Fig. 3 shows a state of the power conversion system according to an aspect after Fig. 2.
Fig. 4 shows a state of the power conversion system according to an aspect after Fig. 3.
Fig. 5 shows a configuration of a power converter.
Fig. 6 is a circuit diagram showing a submodule example of each leg circuit of Fig. 5.
Fig. 7 is a block diagram showing a hardware configuration example of a controller.
Fig. 8 is a block diagram showing a functional configuration example of the controller.

DESCRIPTION OF EMBODIMENTS

The present embodiment will be described below with reference to the drawings. In the description below, the same elements have the same reference characters allotted, and their labels and functions are also the same. Therefore, detailed description thereof will not be repeated.

<Overall Configuration>

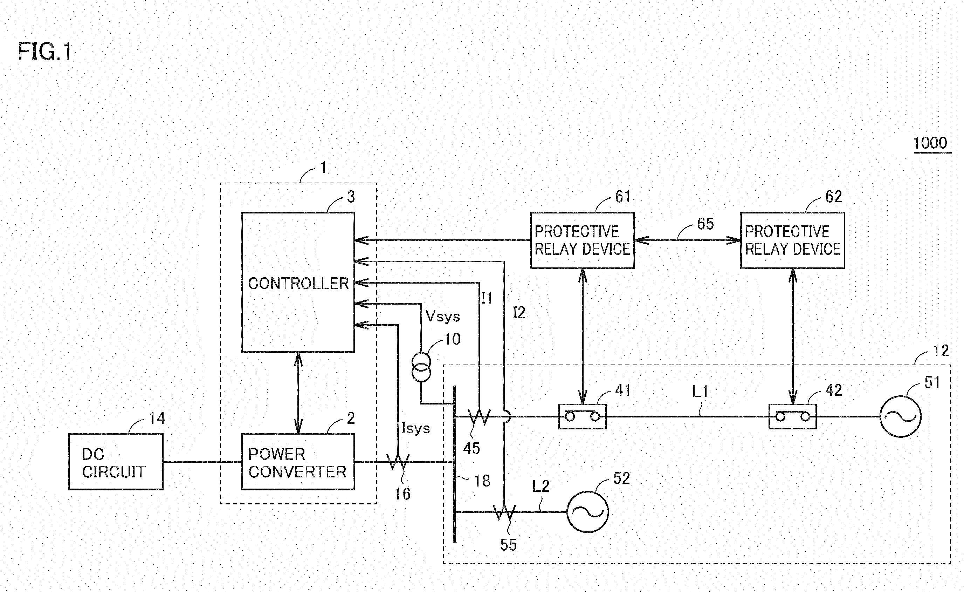

Fig. 1 is a schematic configuration diagram of a power conversion system. A power conversion system 1000 includes an AC circuit 12, a DC circuit 14, a power conversion device 1 that performs power conversion between AC circuit 12 and DC circuit 14, and protective relay devices 61, 62. Power conversion device 1 includes a power converter 2, which is a self-commutated converter, and a controller 3.
AC circuit 12 includes a busbar 18, AC systems 51, 52, and breakers 41, 42. Busbar 18 is connected with power transmission lines L1, L2 and power converter 2. AC system 51 is connected via power transmission line L1 to busbar 18, and AC system 52 is connected via power transmission line L2 to busbar 18. Breakers 41, 42 are provided on power transmission line L1.
In the present embodiment, AC system 51 is a large-scale power system that can be treated as an infinite busbar. The infinite busbar is an ideal power supply whose frequency and voltage do not fluctuate even when large load fluctuations occur in a load connected to a busbar. Thus, AC system 51 has a sufficient capacity for stable operation even when electric power is interchanged with power converter 2 and AC system 52. In contrast, AC system 52 is a small-scale power system with a light load. Specifically, AC system 52 is a power system whose electric power needs to be absorbed or supplied for an amount of differential capacity indicating a difference between installed capacity (e.g., generator capacity) and load capacity.
As shown in Fig. 1, when power converter 2 and AC systems 51, 52 are connected via busbar 18, which is a point of interconnection, AC system 51 absorbs or supplies electric power for the amount of differential capacity of AC system 52. For example, when the installed capacity of AC system 52 is smaller than the load capacity, AC system 51 supplies electric power for the amount of differential capacity to AC system 52. In contrast, when the installed capacity of AC system 52 is greater than the load capacity, AC system 51 absorbs electric power for the amount of differential capacity from AC system 52. In the present embodiment, the converter capacity (e.g., 100 MW to 1000 MW) of power converter 2 is greater than the differential capacity in AC system 52. When being interconnected with AC systems 51, 52, power converter 2 operates to control an output current to be constant by a current control scheme.

Protective relay devices 61, 62 obtain an electrical quantity (e.g., current, voltage) used for protection control of power transmission line L1. For example, protective relay devices 61, 62 are digital current differential relay devices employing a current differential scheme. Protective relay device 61 takes in current information detected on its own end side (e.g., busbar 18 side), digitally convers the current information, and then transmits the current information to protective relay device 62 via a transmission path 65. Protective relay device 61 receives, via transmission path 65, current information on the other end side (e.g., AC system 51 side) obtained on the protective relay device 62 side.

Protective relay device 61 performs a current differential operation based on the current information on its own end side and current information on the other end side to determine a fault of power transmission line L1. Upon detection of a fault that has occurred in power transmission line L1, protective relay device 61 outputs an open command (e.g., trip signal) to breaker 41, thereby opening breaker 41. Similarly, upon detection of a fault that has occurred in power transmission line L1, protective relay device 62 outputs an open command to breaker 42, thereby opening breaker 42. Protective relay devices 61, 62 receive a state signal indicating an open state or a closed state from breakers 41, 42, respectively.

It suffices that protective relay devices 61, 62 are relay devices for protecting power transmission line L1. For example, protective relay devices 61, 62 may be configured with, as a relay operation element, various relay operation elements such as an overcurrent relay, an overvoltage relay, an undervoltage relay, and a current differential relay.

In the present embodiment, power converter 2 is a self-commutated converter configured of a modular multilevel converter (MMC). DC circuit 14 is, for example, a DC power system including a DC power grid and any other power conversion device that performs DC output.

Controller 3 controls an operation of power converter 2. Controller 3 receives an input of the respective currents detected by AC current detectors 16, 45, 55 and an AC voltage Vsys of busbar 18 which is detected by AC voltage detector 10. AC current detector 16 detects a current Isys output from power converter 2. AC current detector 45 detects a current I1 flowing through power transmission line L1, and AC current detector 55 detects a current I2 flowing through power transmission line L2. Controller 3 is configured so as to communicate with protective relay device 61. Controller 3 may be configured so as to communicate with protective relay device 62.

<Outline of Operation>

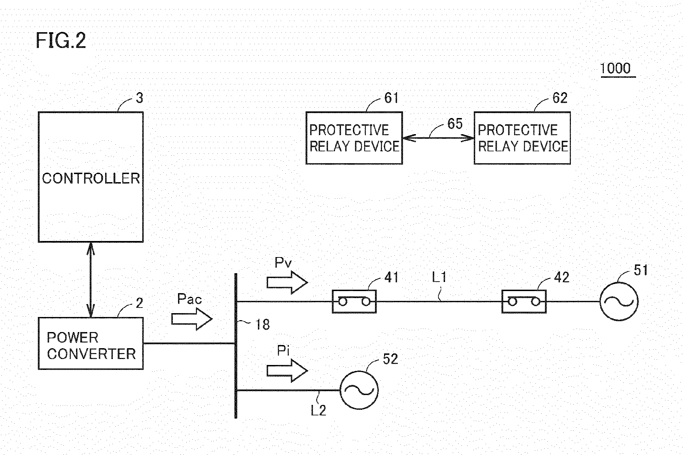

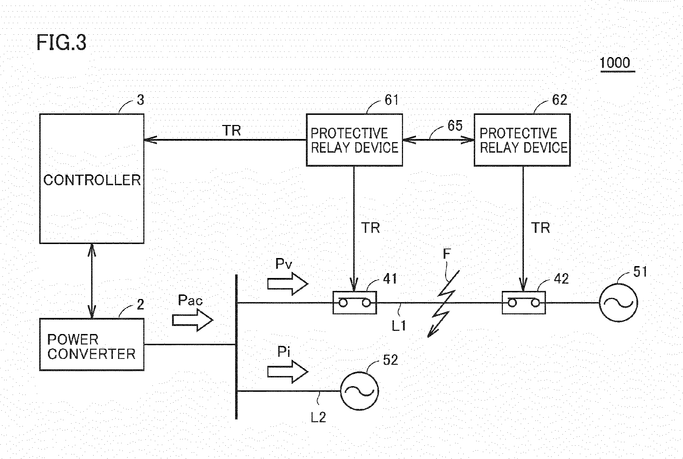

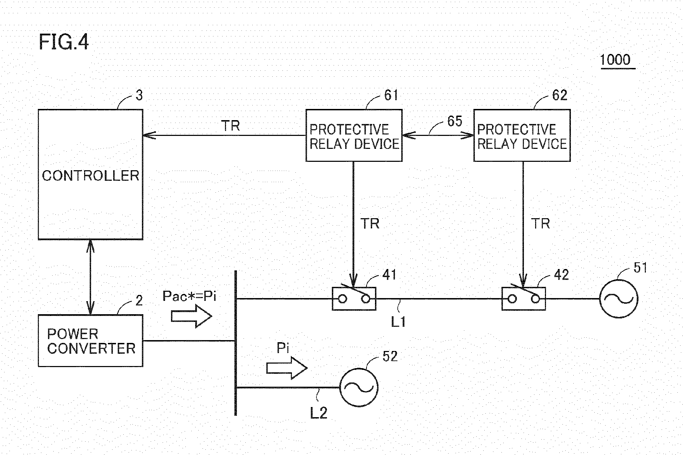

An outline of operation of power conversion system 1000 will be described with reference to Figs. 2 to 4. Fig. 2 shows a state of the power conversion system according to an aspect. Fig. 3 shows a state of the power conversion system according to an aspect after Fig. 2. Fig. 4 shows a state of the power conversion system according to an aspect after Fig. 3. For simplicity of description, Figs. 2 to 4 do not show some components shown in Fig. 1.

Referring to Fig. 2, power converter 2 is interconnected with AC systems 51, 52 via busbar 18. In this case, power converter 2 operates in the current control scheme and outputs active power Pac. Active power Pv is output to power transmission line L1, and active power Pi is output to power transmission line L2. Active power Pac is calculated based on AC voltage Vsys of busbar 18 and current Isys detected by AC current detector 16. Active power Pv is calculated based on AC voltage Vsys and current I1 detected by AC current detector 45. Active power Pi is calculated based on AC voltage Vsys and current I2 detected by AC current detector 55. In the example of Fig. 2, active power Pac corresponds to the sum of active power Pv and active power Pi. Thus, active power Pi may be calculated as a difference value between active power Pac and active power Pv. The same also holds true for active power Pv.

Referring to Fig. 3, a fault (e.g., short-circuit fault or ground fault) occurs at a point of fault F in power transmission line L1. Protective relay devices 61, 62 detect the fault of power transmission line L1 by a protection relay operation and output trip signals TR to breakers 41, 42, respectively. Protective relay device 61 also outputs trip signal TR to controller 3.

Referring to Fig. 4, upon receipt of trip signal TR from protective relay device 61, controller 3 switches the control scheme of power converter 2 from the current control scheme to a voltage control scheme. As described above, power converter 2 has a converter capacity greater than the differential capacity in AC system 52. Thus, power converter 2 operates as a power supply (i.e., voltage supply) for AC system 51, thereby absorbing or supplying electric power for an amount of differential capacity in AC system 52. Even when AC system 51 serving as the infinite busbar is disconnected from busbar 18, thus, AC voltage can be maintained as power converter 2 supplies electric power to AC system 52. This can prevent a power failure from occurring in AC system 52 and allows an appropriate operation to continue.

Before breakers 41, 42 are opened based on trip signals TR output from protective relay devices 61, 62, controller 3 changes an active power command value, which is a target value of active power output from power converter 2, to "Pac*". Specifically, controller 3 sets active power command value Pac* to active power Pi output to power transmission line L2 before occurrence of the fault. Controller 3 outputs such active power that follows the active power command value, and accordingly, the active power command value is "Pac" in the state of Fig. 2. Thus, before and after occurrence of the fault, controller 3 changes the active power command value from "Pac" to "Pi". Then, breakers 41, 42 are opened, so that active power Pi is output to power transmission line L2.

As described above, active power supplied to power transmission line L2 can be maintained as much as possible before and after occurrence of a fault in power transmission line L1 by changing the active power command value. Therefore, oscillations of AC system 52 due to the disconnection of AC system 51 can be reduced.

<Configuration of Power Converter>

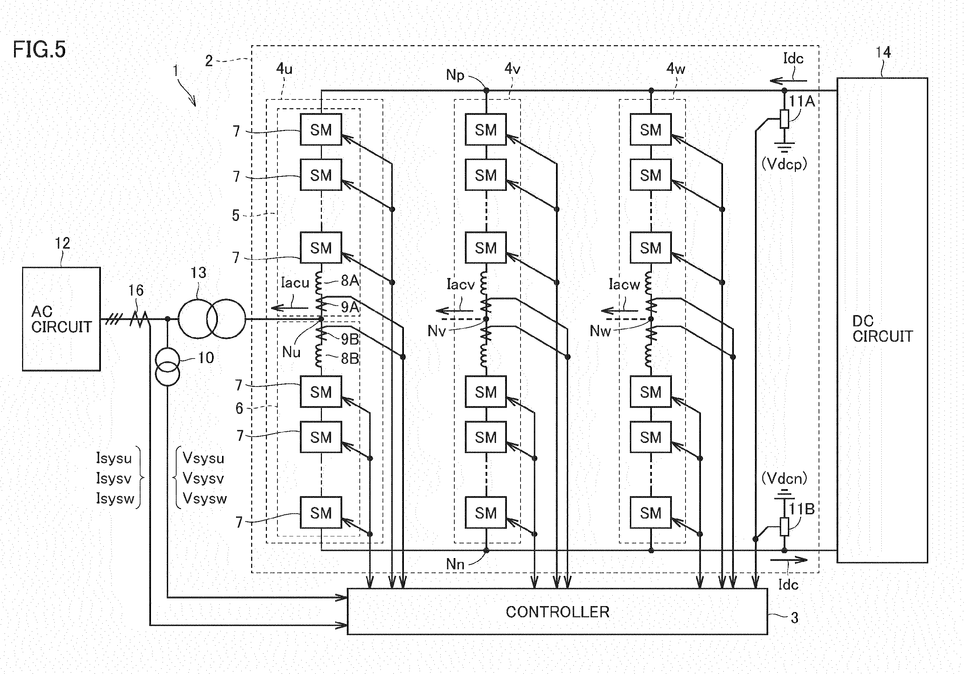

Fig. 5 shows a configuration of power converter 2. Referring to Fig. 5, power converter 2 is configured of an MMC converter including a plurality of submodules (corresponding to "SMs" in Fig. 5) 7 connected in series.

Power converter 2 includes a plurality of leg circuits 4u, 4v, 4w (hereinafter, referred to as "leg circuit 4" when referred to correctively or when referring to any leg circuit) connected in parallel between a positive DC terminal (i.e., high-potential-side DC terminal) Np and a negative DC terminal (i.e., low-potential-side DC terminal) Nn.

Leg circuit 4 is provided for each of a plurality of phases of an alternating current. Leg circuit 4 is connected between AC circuit 12 and DC circuit 14 and performs power conversion between both the power systems. Power converter 2 is provided with three leg circuits 4u, 4v, 4w corresponding to a U phase, a V phase, and a W phase, respectively.

AC input terminals Nu, Nv, Nw respectively provided for leg circuits 4u, 4v, 4w are connected via transformer 13 to AC circuit 12. For ease of illustration, Fig. 5 does not show connection between AC input terminals Nv, Nw and transformer 13. Positive DC terminal Np and negative DC terminal Nn connected in common to each leg circuit 4 are connected to DC circuit 14.

AC input terminals Nu, Nv, Nw may be connected to AC circuit 12 via an interconnection reactor instead of transformer 13 of Fig. 5. A primary winding may be further provided for each of leg circuits 4u, 4v, 4w instead of AC input terminals Nu, Nv, Nw, such that leg circuits 4u, 4v, 4w may be connected to transformer 13 or the interconnection reactor in an AC manner via a secondary winding magnetically coupled to the primary winding. In this case, the primary winding may be reactors 8A, 8B described below. In other words, leg circuit 4 is electrically (i.e., in a DC manner or an AC manner) connected to AC circuit 12 via the respective connecting portions provided in leg circuits 4u, 4v, 4w, such as AC input terminals Nu, Nv, Nw or the primary winding described above.

Leg circuit 4u is configured of two series-connected arms. Specifically, leg circuit 4u includes an upper arm 5 from positive DC terminal Np to AC input terminal Nu and a lower arm 6 from negative DC terminal Nn to AC input terminal Nu. AC input terminal Nu, which is a point of connection between upper arm 5 and lower arm 6, is connected to transformer 13. Positive DC terminal Np and negative DC terminal Nn are connected to DC circuit 14. Since leg circuits 4v, 4w have a similar configuration, leg circuit 4u will be representatively described below.

Upper arm 5 includes a plurality of cascade-connected submodules 7 and a reactor 8A. Submodules 7 and reactor 8A are connected in series to each other. Lower arm 6 includes a plurality of cascade-connected submodules 7 and a reactor 8B. Submodules 7 and reactor 8B are connected in series to each other.

Detectors that measure electrical quantities (e.g., current, voltage) for control are provided in power conversion system 1000. For example, the detectors are an AC voltage detector 10, an AC current detector 16, DC voltage detectors 11A, 11B, arm current detectors 9A, 9B provided in the respective leg circuits 4, and the like. Signals detected by these detectors are input to controller 3.

Controller 3 outputs an operation command for controlling an operating state of each submodule 7 of power converter 2 based on these detected signals. The respective operation commands are generated in correspondence with the upper arm of the U phase, the lower arm of the U phase, the upper arm of the V phase, the lower arm of the V phase, the upper arm of the W phase, and the lower arm of the W phase. Controller 3 receives various types of information from each submodule 7. The various types of information are internal information of submodule 7 and include, for example, a voltage value of a capacitor of submodule 7 and the like.

In Fig. 5, some of signal lines for signals input from the detectors to controller 3 and signal lines for signals input and output between controller 3 and each submodule 7 are indicated collectively for ease of illustration, but in actuality, such signal lines are provided for each detector and for each submodule 7. The signal lines between each submodule 7 and controller 3 may be provided separately for transmission and reception. The signal line is configured of, for example, an optical fiber.

AC voltage detector 10 detects a U-phase AC voltage Vsysu, a V-phase AC voltage Vsysv, and a W-phase AC voltage Vsysw of busbar 18 included in AC circuit 12. AC current detector 16 detects a U-phase AC current Isysu, a V-phase AC current Isysv, and a W-phase AC current Isysw output from power converter 2. DC voltage detector 11A detects a DC voltage Vdcp of positive DC terminal Np connected to DC circuit 14. DC voltage detector 11B detects a DC voltage Vdcn of negative DC terminal Nn connected to DC circuit 14. The difference between DC voltage Vdcp and DC voltage Vdcn is DC voltage Vdc.

Arm current detectors 9A and 9B provided in leg circuit 4u for the U phase respectively detect an arm current Ipu flowing through upper arm 5 and an arm current Inu flowing through lower arm 6. Similarly, arm current detectors 9A and 9B provided in leg circuit 4v for the V phase respectively detect an arm current Ipv and an arm current Inv. Arm current detectors 9A and 9B provided in leg circuit 4w for the W phase respectively detect an arm current Ipw and an arm current Inw.

Based on the signals detected by the respective detectors described above, controller 3 outputs a gate control signal for controlling an operation of each submodule 7. For example, the gate control signal is a pulse width modulation (PWM) signal.

<Configuration of Submodule>

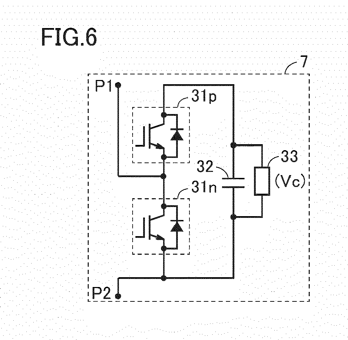

Fig. 6 is a circuit diagram showing a submodule example of each leg circuit in Fig. 5. Specifically, submodule 7 shown in Fig. 6 has a circuit configuration referred to as a half-bridge configuration. Submodule 7 includes a series body formed by series connection of two switching elements 31p, 31n, a power storage element 32, and a voltage detector 33. The series body and power storage element 32 are connected in parallel. Voltage detector 33 detects a voltage across power storage element 32.

The opposite terminals of switching element 31n are input/output terminals P1, P2. The voltage across power storage element 32 and a zero voltage are output by switching operations of switching elements 31p, 31n. For example, the voltage across power storage element 32 is output when switching element 31p is turned on and switching element 31n is turned off. A zero voltage is output when switching element 31p is turned off and switching element 31n is turned on. Although the opposite terminals of switching element 31n are input/output terminals P1, P2 in Fig. 6, the opposite terminals of switching element 31p may be input/output terminals P1, P2, and in such a case, operations are inverted.

Switching elements 31p, 31n are configured by, for example, anti-parallel connection of a freewheeling diode (FWD) to a self-arc-extinguishing semiconductor switching element, such as an insulated gate bipolar transistor (IGBT), a gate commutated turn-off (GCT) thyristor, or a metal oxide semiconductor field-effect transistor (MOSFET). A film capacitor or the like is mainly used for power storage element 32.

The configuration of submodule 7 described above is an example, and submodule 7 having any other configuration may be applied to the present embodiment. For example, submodule 7 may be configured using a full-bridge conversion circuit.

<Hardware Configuration Example of Controller>

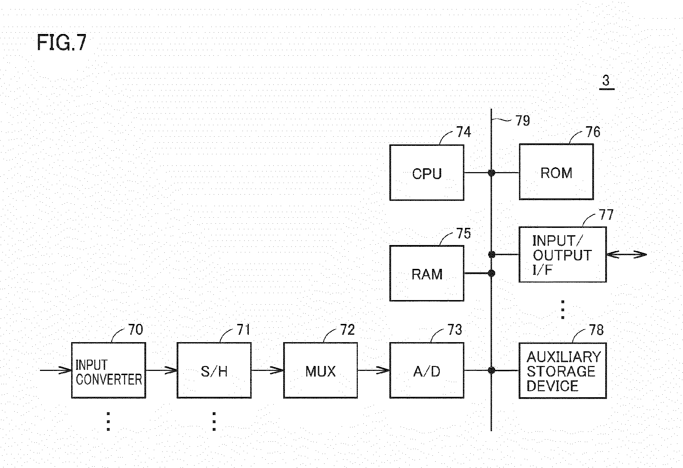

Fig. 7 is a block diagram showing a hardware configuration example of controller 3. Controller 3 in the case of Fig. 7 is configured based on a computer. Referring to Fig. 7, controller 3 includes one or more input converters 70, one or more sample and hold (S/H) circuits 71, a multiplexer (MUX) 72, and an A/D converter 73. Controller 3 further includes one or more central processing units (CPUs) 74, a random access memory (RAM) 75, and a read only memory (ROM) 76. Controller 3 further includes one or more input/output interfaces 77, an auxiliary storage device 78, and a bus 79 connecting the components described above to each other.

Input converter 70 includes an auxiliary transformer for each input channel. Each auxiliary transformer converts a signal detected by its corresponding electrical quantity detector, shown in Figs. 1 and 5, into a signal of a voltage level suitable for subsequent signal processing.

Sample and hold circuit 71 is provided for each input converter 70. Sample and hold circuit 71 samples a signal indicating an electrical quantity received from its corresponding input converter 70 at a prescribed sampling frequency and holds the signal.

Multiplexer 72 sequentially selects signals held by sample and hold circuits 71. A/D converter 73 converts a signal selected by multiplexer 72 into a digital value. A plurality of A/D converters 73 may be provided so as to perform A/D conversion in parallel on detected signals of a plurality of input channels.

CPU 74 controls the entire controller 3 and performs arithmetic processing in accordance with a program. RAM 75 as a volatile memory and ROM 76 as a nonvolatile memory are used as a main memory of CPU 74. ROM 76 stores a program and setting values for signal processing. Auxiliary storage device 78 is a nonvolatile memory having a high capacity compared with ROM 76 and stores, for example, a program and data on electrical quantity detection values.

Input/output interface 77 is an interface circuit in communications between CPU 74 and an external device. A communication scheme may be a wire communication scheme or a radio communication scheme.

At least part of controller 3 may be configured using a circuit such as a field programmable gate array (FPGA) and an application specific integrated circuit (ASIC). Protective relay devices 61, 62 may be configured based on a computer as in the case of controller 3, or at least some of protective relay devices 61, 62 may be configured using a circuit such as an FPGA and an ASIC.

<Functional Configuration of Controller>

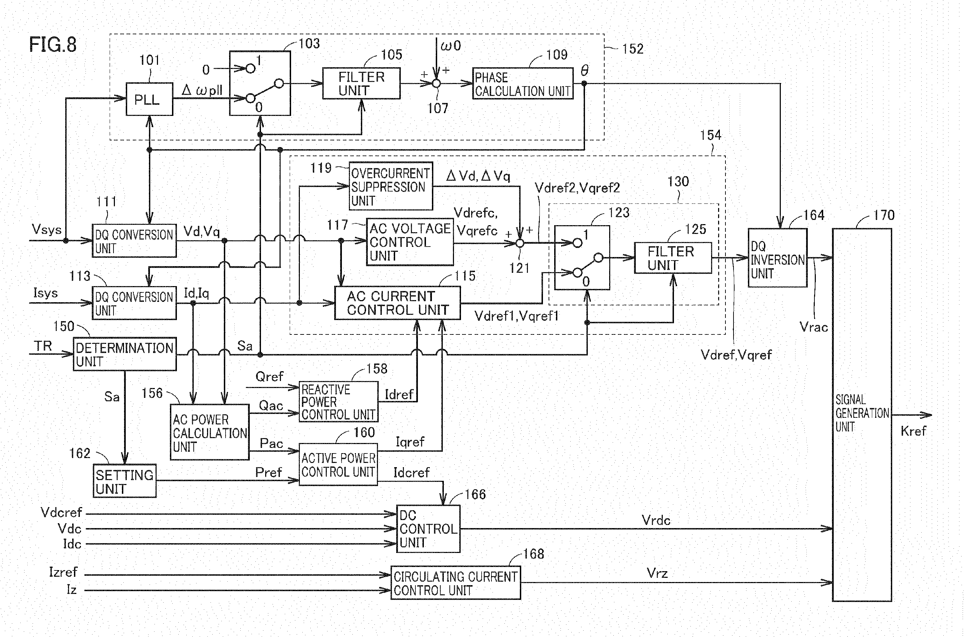

Fig. 8 is a block diagram showing a functional configuration example of controller 3. Referring to Fig. 8, controller 3 includes dq conversion units 111, 113, a determination unit 150, a phase generation unit 152, an AC control unit 154, an AC power calculation unit 156, a reactive power control unit 158, an active power control unit 160, a setting unit 162, a dq inversion unit 164, a DC control unit 166, a circulating current control unit 168, and a signal generation unit 170. Each of these functions is implemented by a processing circuit. The processing circuit may be special-purpose hardware or CPU 74 that executes a program stored in an internal memory of controller 3. When the processing circuit is special-purpose hardware, the processing circuit may be configured of, for example, an FPGA, an ASIC, or a combination thereof.

(Determination Unit)

Determination unit 150 receives a protection signal (e.g., trip signal TR) for disconnecting AC system 51 from busbar 18, which is transmitted from protective relay device 61 that protects AC system 51. Based on trip signal TR, determination unit 150 determines whether AC system 51 is disconnected from busbar 18. Specifically, after a lapse of a prescribed time from reception of trip signal TR, determination unit 150 determines that AC system 51 is disconnected from busbar 18. Alternatively, determination unit 150 may utilize a fact that the amplitude of AC voltage Vsys of busbar 18 increases as AC system 51 is disconnected from busbar 18. For example, determination unit 150 may determine that AC system 51 is disconnected from busbar 18 when determination unit 150 receives trip signal TR and AC voltage Vsys of busbar 18 is not less than a threshold Th1.

Determination unit 150 outputs a signal Sa indicating a determination result. For example, determination unit 150 outputs signal Sa having a value "0" when determining that AC system 51 is not disconnected from busbar 18 and outputs signal Sa having a value "1" when determining that AC system 51 is disconnected from busbar 18. Though details will be described later, an AC voltage command value according to the AC current control scheme is generated when signal Sa having a value "0" is output, and an AC voltage command value according to the AC voltage control scheme is generated when signal Sa having a value "1" is output.

(Phase Generation Unit)

Phase generation unit 152 generates a phase $\theta$ of an output voltage of power converter 2. Specifically, phase generation unit 152 includes a PLL circuit 101, a switch unit 103, a filter unit 105, an adder 107, and a phase calculation unit 109.

PLL circuit 101 calculates an angular frequency adjustment amount $\Delta\omega\rho ll$ based on AC voltage Vsys and phase $\theta$ of the output voltage of power converter 2. Angular frequency adjustment amount $\Delta\omega\rho ll$ is an angular frequency for synchronizing phase $\theta$ with a phase $\theta$sys of AC voltage Vsys of busbar 18.

Specifically, PLL circuit 101 performs three-phase/two-phase conversion of AC voltages Vsysu, Vsysv, Vsysw of three phases using phase $\theta$, thereby calculating a d-axis voltage Vd and a q-axis voltage Vq. PLL circuit 101 calculates a phase difference $\Delta\theta\rho ll$ between phase $\theta$sys of AC voltage Vsys and phase $\theta$ based on d-axis voltage Vd and q-axis voltage Vq. Phase difference $\Delta\theta\rho ll$ is typically expressed by $\Delta\theta\rho ll = \arctan(Vd/Vq)$. PLL circuit 101 calculates angular frequency adjustment amount $\Delta\omega\rho ll$ based on phase difference $\Delta\theta\rho ll$ and a predetermined transfer function G. An initial value of phase $\theta$ is a phase $\theta 0$ obtained by time integration of a reference angular frequency $\omega 0$. Reference angular frequency $\omega 0$ is an angular frequency of a reference frequency (e.g., 50 Hz or 60 Hz) of electric power in AC systems 51, 52.

Switch unit 103 outputs an angular frequency adjustment amount according to signal Sa. Specifically, upon receipt of an input of signal Sa having a value "0", switch unit 103 outputs angular frequency adjustment amount $\Delta\omega\rho ll$ generated by PLL circuit 101. Upon receipt of an input of signal Sa having a value "1", switch unit 103 outputs a value "0". This means that the angular frequency adjustment amount is "0".

Filter unit 105 performs prescribed filter processing on the angular frequency adjustment amount based on signal Sa, and outputs an angular frequency adjustment amount $\Delta\omega\rho ll^*$. Specifically, when receiving an input of signal Sa having a value "0", filter unit 105 outputs angular frequency adjustment amount $\Delta\omega\rho ll$ as angular frequency adjustment amount $\Delta\omega\rho ll^*$ without performing filter processing on an output value (i.e., angular frequency adjustment amount $\Delta\omega\rho ll$) of switch unit 103.

In contrast, upon receipt of an input of signal Sa having a value " 1", filter unit 105 outputs angular frequency adjustment amount $\Delta\omega\rho ll^*$ obtained by performing filter processing on an output value of switch unit 103. Specifically, filter unit 105 gradually changes angular frequency adjustment amount $\Delta\omega\rho ll^*$ from an output value (i.e., angular frequency adjustment amount $\Delta\omega\rho ll$) of switch unit 103, which corresponds to signal Sa having a value "0", to an output value (i.e.,

a value "0") of switch unit 103, which corresponds to signal Sa having a value "1". Filter unit 105 maintains an output of a value "0" when angular frequency adjustment amount Δωpll* reaches a value "0". For example, filter unit 105 changes angular frequency adjustment amount Δωpll* from angular frequency adjustment amount Δωpll to a value "0" between switch of signal Sa from a value "0" to a value "1" and the lapse of a prescribed time Ts. Filter unit 105 is configured of a first order lag element, a rate-of-change limiter, or the like.

Adder 107 performs an add operation of angular frequency adjustment amount Δωpll* output from filter unit 105 and reference angular frequency ω0 and outputs an angular frequency ω (= Δωpll* + ω0). Phase calculation unit 109 performs time integration of angular frequency ω to generate phase θ of the output voltage of power converter 2. Thus, when the value of signal Sa is "0", phase calculation unit 109 performs time integration of an addition value of angular frequency adjustment amount Δωpll and reference angular frequency ω0 to calculate a phase θ1. When the value of signal Sa is "1", after a lapse of prescribed time Ts, phase calculation unit 109 performs time integration of reference angular frequency ω0, thereby calculating a phase θ2. Phase calculation unit 109 is typically configured of an integrator.

As described above, phase generation unit 152 generates, as phase θ of the output voltage, a phase calculated by time integration of the addition value of angular frequency adjustment amount Δωpll* and reference angular frequency ω0. Specifically, when AC system 51 is not disconnected from busbar 18 (i.e., when the value of signal Sa is "0"), phase generation unit 152 generates phase θ1 as phase θ.

In contrast, when AC system 51 is disconnected from busbar 18 (i.e., when the value of signal Sa is "1"), phase generation unit 152 changes phase θ from phase θ1 to phase θ2. Specifically, phase generation unit 152 generates phase θ by time integration of an addition value of angular frequency adjustment amount Δωpll* and reference angular frequency ω0 until after the lapse of prescribed time Ts, and after a lapse of prescribed time Ts, generates phase θ by time integration of reference angular frequency ω0. Phase generation unit 152 may be configured without filter unit 105. In this case, phase generation unit 152 generates phase θ2 as phase θ irrespective of prescribed time Ts.

(Generation of AC Voltage Command Value)

A functional configuration related to the generation of an AC voltage command value for power converter 2 will be described.

Dq conversion unit 111 performs three-phase/two-phase conversion of AC voltages Vsysu, Vsysv, Vsysw using phase θ to calculate d-axis voltage Vd and q-axis voltage Vq. Dq conversion unit 113 performs three-phase/two-phase conversion of AC currents Isysu, Isysv, Isysw using phase θ to calculate a d-axis current Id and a q-axis current Iq.

Based on d-axis voltage Vd, q-axis voltage Vq, d-axis current Id, and q-axis current Iq, AC power calculation unit 156 calculates active power Pac and reactive power Qac output from power converter 2.

Reactive power control unit 158 generates a reactive current command value Idref, which is a command value of a reactive current output from power converter 2, by feedback control for reducing the deviation between reactive power command value Qref and reactive power Qac to zero. Reactive power command value Qref is, for example, a value preset by a system operator or the like.

Active power control unit 160 generates an active current command value Iqref, which is a command value of an active current output from power converter 2, by feedback control for reducing the deviation between active power command value Pref and active power Pac to zero. Active power command value Pref is set by setting unit 162. Details of setting unit 162 will be described later.

AC control unit 154 generates an AC voltage command value for power converter 2 in accordance with any one of the AC current control scheme and the AC voltage control scheme. Specifically, when AC system 51 is disconnected from busbar 18, AC control unit 154 switches the control scheme of power converter 2 from the AC current control scheme to the AC voltage control scheme, and generates an AC voltage command value in accordance with the AC voltage control scheme. Specifically, AC control unit 154 includes an AC current control unit 115, an AC voltage control unit 117, an overcurrent suppression unit 119, and a command value generation unit 130.

AC current control unit 115 generates an AC voltage command value Vref1 for causing an output current of power converter 2 to follow AC current command value Iref. Specifically, AC current control unit 115 generates a d-axis voltage command value Vdref1 (i.e., a d-axis component of AC voltage command value Vref1) by feedback control for reducing the deviation between d-axis current Id and reactive current command value Idref (i.e., a reactive component of AC current command value Iref) to zero and feedforward control of a reactive component of AC voltage Vsys.

AC current control unit 115 generates a q-axis voltage command value Vqref1 (i.e., a q-axis component of AC voltage command value Vref1) by feedback control for reducing the deviation between q-axis current Iq and active current command value Iqref (i.e., an active component of AC current command value Iref) to zero and feedforward control of an active component of AC voltage Vsys. Feedforward control described above is performed for improving the disturbance response of AC circuit 12 to voltage fluctuations. AC current control unit 115 may be configured not to perform feedforward control of AC voltage Vsys. D-axis voltage command value Vdref1 and q-axis voltage command value Vqref1 will also be collectively referred to as AC voltage command value Vref1 below.

AC voltage control unit 117 generates an AC voltage command value Vref2 such that AC voltage Vsys of busbar 18 becomes equal to a target voltage. Specifically, AC voltage control unit 117 generates a d-axis voltage command value Vdrefc by feedback control for reducing the deviation between d-axis voltage Vd and a reactive voltage command value Vdt (i.e., a reactive component of the target voltage) to zero. AC voltage control unit 117 generates a q-axis voltage command value Vqrefc by feedback control for reducing the deviation between q-axis voltage Vq and an active voltage command value Vqt (i.e., an active component of the target voltage) to zero. Reactive voltage command value Vdt and active voltage command value Vqt are, for example, values preset by a system operator or the like.

Overcurrent suppression unit 119 generates a suppression amount for restricting an AC voltage command value generated in accordance with the AC control scheme, when an output current of power converter 2 becomes an overcurrent. Specifically, overcurrent suppression unit 119 extracts a fundamental frequency component of d-axis current Id and a fundamental frequency component of q-axis current Iq and calculates an amplitude |I| and a phase $\phi i$ of the fundamental frequency component. Overcurrent suppression unit 119 restricts amplitude |I| within a range (lower limit: -Imax, upper limit: +Imax) according to a limit value |Imax|.

Based on amplitude |I| and phase $\phi i$, overcurrent suppression unit 119 generates a d-axis current target value Idref* and a q-axis current target value Iqref* by dq conversion. Overcurrent suppression unit 119 calculates a deviation $\Delta$Id (= Idref*- Id) between d-axis current target value Idref* and d-axis current Id and a deviation $\Delta$Iq (= Iqref* - Iq) between q-axis current target value Iqref* and q-axis current Iq. Overcurrent suppression unit 119 calculates a d-axis voltage suppression amount $\Delta$Vd as a multiplication value of deviation $\Delta$Id and a gain Kd (Kd $\geq$ 0) and calculates a q-axis voltage suppression amount $\Delta$Vq as a multiplication value of deviation $\Delta$Iq and gain Kd, where $\Delta$Vd $\leq$ 0 and $\Delta$Vq $\leq$ 0.

Adder 121 adds d-axis voltage command value Vdrefc and d-axis voltage suppression amount $\Delta$Vd to generate a d-axis voltage command value Vdref2 (i.e., a d-axis component of AC voltage command value Vref2). Adder 121 adds q-axis voltage command value Vqrefc and q-axis voltage suppression amount $\Delta$Vq to generate a q-axis voltage command value Vqref2 (i.e., a q-axis component of AC voltage command value Vref2). D-axis voltage command value Vdref2 and q-axis voltage command value Vqref2 will also be collectively referred to as AC voltage command value Vref2 below.

Thus, even when amplitude |I| becomes not less than limit value |Imax| (e.g., even when an output current of power converter 2 becomes an overcurrent), an AC voltage command value Vrefl, which suppresses an overcurrent of an output current of power converter 2, is generated by d-axis voltage suppression amount $\Delta$Vd and q-axis voltage suppression amount $\Delta$Vq generated by overcurrent suppression unit 119.

Thus, AC voltage command value Vref2 is restricted by d-axis voltage suppression amount $\Delta$Vd and q-axis voltage suppression amount $\Delta$Vq when an overcurrent occurs, but when no overcurrent occurs, AC voltage command value Vref2 is not restricted, and "Vdrefc = Vdref2" and "Vqrefc = Vqref2" are satisfied.

Based on a determination result of determination unit 150, AC voltage command value Vrefl, and AC voltage command value Vref2, command value generation unit 130 generates AC voltage command value Vref for power converter 2. Specifically, command value generation unit 130 includes a switch unit 123 and a filter unit 125.

Switch unit 123 outputs an AC voltage command value according to signal Sa. Specifically, switch unit 123 outputs an AC voltage command value Vref1 upon receipt of an input of signal Sa having a value "0". Upon receipt of an input of signal Sa having a value "1", switch unit 123 outputs AC voltage command value Vref2.

Filter unit 125 performs prescribed filter processing on the AC voltage command value based on signal Sa, and outputs d-axis voltage command value Vdref (i.e., a d-axis component of AC voltage command value Vref) and q-axis voltage command value Vqref (i.e., a q-axis component of AC voltage command value Vref). D-axis voltage command value Vdref and q-axis voltage command value Vqref will also be collectively referred to as AC voltage command value Vref below.

Specifically, when receiving an input of signal Sa having a value "0", filter unit 125 outputs AC voltage command value Vref1 as AC voltage command value Vref without performing filter processing on an output value (i.e., AC voltage command value Vrefl) of switch unit 123.

In contrast, upon receipt of an input of signal Sa having a value " 1", filter unit 125 outputs AC voltage command value Vref obtained by performing filter processing on an output value of switch unit 123. Specifically, filter unit 125 gradually changes AC voltage command value Vref from an output value (i.e., AC voltage command value Vrefl) of switch unit 123, which corresponds to signal Sa having a value "0", to an output value (i.e., AC voltage command value Vref2) of switch unit 123, which corresponds to signal Sa having a value "1". When AC voltage command value Vref reaches AC voltage command value Vref2, filter unit 125 maintains an output of AC voltage command value Vref2. For example, filter unit 125 changes AC voltage command value Vref from AC voltage command value Vref1 to AC voltage command value Vref2 between switch of signal Sa from value "0" to "1" and the lapse of prescribed time Ts. Filter unit 125 is configured of a first order lag element, a rate-of-change limiter, or the like.

As described above, when AC system 51 is not disconnected from busbar 18 (i.e., when the value of signal Sa is "0"), command value generation unit 130 generates AC voltage command value Vref1 as AC voltage command value Vref.

In contrast, when AC system 51 is disconnected from busbar 18 (i.e., when the value of signal Sa is "1"), command value generation unit 130 changes AC voltage command value Vref from AC voltage command value Vref1 to AC voltage command value Vref2. Specifically, command value generation unit 130 generates AC voltage command value Vref by changing AC voltage command value Vref1 to AC voltage command value Vref2 until after the lapse of prescribed time Ts, and generates AC voltage command value Vref2 as AC voltage command value Vref after a lapse of prescribed time Ts. Command value generation unit 130 may be configured without filter unit 125. In this case, command value generation unit 130 generates AC voltage command value Vref2 as AC voltage command value Vref irrespective of prescribed time Ts.

Dq inversion unit 164 generates a three-phase AC voltage command value Vrac by two-phase/three-phase conversion based on phase θ generated by phase generation unit 152 and AC voltage command value Vref generated by AC control unit 154.

(Setting Unit)

Setting unit 162 sets active power command value Pref for power converter 2 based on a determination result of determination unit 150. Specifically, when AC system 51 is disconnected from busbar 18, setting unit 162 sets active power command value Pref to active power Pi output to AC system 52 before disconnection of AC system 51 from busbar 18.

Specifically, when receiving an input of signal Sa having a value "0", setting unit 162 sets active power command value Pref to a prescribed active power command value. The prescribed active power command value is typically determined as appropriate by a system operator. Upon receipt of an input of signal Sa having a value "1", setting unit 162 sets active power command value Pref to active power Pi.

Setting unit 162 may be configured to set active power command value Pref to active power Pi before breaker 41 is actually opened. In this case, a time Tx2, which is from output of trip signal TR to controller 3 by protective relay device 61 to change of active power command value Pref to active power Pi by setting unit 162, is set to be shorter than a time Tx1, which is from output of trip signal TR to breaker 41 by protective relay device 61 to opening of breaker 41.

(DC Control Unit, Circulating Current Control Unit)

DC control unit 166 performs DC current control to cause a DC current Idc to follow a DC current command value Idcref. In power converter 2, AC currents Isysu, Isysv, Isysw, and DC current Idc flowing from DC circuit 14 are expressed by Equations (1) to (4) using the respective arm currents.

$$Isysu = Ipu - Inu \ldots (1)$$

$$Isysv = Ipv - Inv \ldots (2)$$

$$Isysw = Ipw - Inw \ldots (3)$$

$$Idc = (Ipu + Inu + Ipv + Inv + Ipw + Inw)/2 \ldots (4)$$

Typically, DC control unit 166 generates a DC control command value Vrdc by feedback control for reducing the deviation between DC current command value Idcref and DC current Idc to zero. Specifically, DC control unit 166 calculates the deviation between DC current command value Idcref and DC current Idc, and performs a control operation to reduce the deviation to zero, thereby generating DC control command value Vrdc as a result of the control operation.

Alternatively, DC control unit 166 may be configured to basically perform DC voltage control to cause DC voltage Vdc to follow DC voltage command value Vdcref, and when a DC current exceeds a predetermined upper limit, perform DC current control. Typically, by feedback control for reducing the deviation between DC voltage command value Vdcref and DC voltage Vdc to zero, DC control unit 166 generates DC control command value Vrdc, and when the DC current exceeds the upper limit, performs DC current control described above. Specifically, DC control unit 166 calculates the deviation between DC voltage command value Vdcref and DC voltage Vdc and performs a control operation to reduce the deviation to zero, thereby generating DC control command value Vrdc as a result of the control operation.

Circulating current control unit 168 calculates a circulation control command value Vrz to control a circulating current Iz to follow a circulating current command value Izref (e.g., 0). Circulating current command value Izref is determined as appropriate by a system operator. A U-phase circulating current Izu, a V-phase circulating current Izv, and a W-phase circulating current Izw flowing through a closed circuit of power converter 2 without AC circuit 12 and DC circuit 14 in its path are expressed by equations (5) to (7) below.

$$Izu = (Ipu + Inu)/2 - Idc/3 \ldots (5)$$

$$Izv = (Ipv + Inv)/2 - Idc/3 \ldots (6)$$

$$Izw = (Ipw + Inw)/2 - Idc/3 \ldots (7)$$

(Signal Generation Unit)

Signal generation unit 170 generates an arm voltage command value Kref corresponding to each arm based on AC voltage command value Vrac, DC control command value Vrdc, and circulation control command value Vrz. Signal generation unit 170 generates a gate control signal GP for controlling a switching element of each arm to be turned on and off, based on each arm voltage command value Kref, and outputs gate control signal GP to a corresponding switching element. Typically, an arm control unit 503 compares arm voltage command value Kref with a carrier signal, and generates a gate control signal GP as a PWM signal based on a result of the comparison. For example, a triangular wave is used as the carrier signal.

<Advantages>

According to the present embodiment, even when AC system 51, which is a large-scale AC system, is disconnected from busbar 18, operation can be continued without causing a power failure in AC system 52 by switching the control scheme from the current control scheme to the voltage control scheme without gate blocking of power converter 2. Also, oscillations of AC system 52 due to disconnection of AC system 51 can be reduced.

Other Embodiments

The above embodiment has described the configuration in which power converter 2 is a modular multilevel converter, but the present disclosure is not limited to this configuration. For example, the control scheme of power converter 2 may be configured by a two-level converter that converts AC power into two-level DC power, or may be configured by a three-level converter that converts AC power into three-level AC power.

The above configurations described as embodiments are examples of the configuration of the present disclosure, can be combined with any other known technique, and are susceptible to modifications such as partial omission without departing from the gist of the present disclosure. In the embodiments described above, the processing and configuration described in any other embodiment may be employed and carried out, if necessary.

It should be understood that the embodiments disclosed herein have been presented for the purpose of illustration and non-restrictive in every respect. It is therefore intended that the scope of the present disclosure is defined by claims, not only by the description above, and encompasses all modifications and variations equivalent in meaning and scope to the claims.

REFERENCE SIGNS LIST

1 power conversion device; 2 power converter; 3 controller; 4u, 4v, 4w leg circuit; 5 upper arm; 6 lower arm; 7 submodule; 8A, 8B reactor; 9A arm current detector; 10 AC voltage detector; 11A, 11B DC voltage detector; 12 AC circuit; 13 transformer; 14 DC circuit; 16, 45, 55 AC current detector; 18 busbar; 31n, 3 Ip switching element; 32 power storage element; 33 voltage detector; 41, 42 breaker; 51, 52 AC system; 61, 62 protective relay device; 65 transmission path; 70 input converter; 71 sample and hold circuit; 72 multiplexer; 73 A/D converter; 74 CPU; 75 RAM; 76 ROM; 77 input/output interface; 78 auxiliary storage device; 79 bus; 101 PLL circuit; 103, 123 switch unit; 105, 125 filter unit; 107, 121 adder; 109 phase calculation unit; 111, 113 dq conversion unit; 115 AC current control unit; 117 AC voltage control unit; 119 overcurrent suppression unit; 130 command value generation unit; 150 determination unit; 152 phase generation unit; 154 AC control unit; 156 AC power calculation unit; 158 reactive power control unit; 160 active power control unit; 162 setting unit; 164 dq inversion unit; 166 DC control unit; 168 circulating current control unit; 170 signal generation unit; 503 arm control unit; 1000 power conversion system.

**EP 4 412 023 A1**

**Claims**

1. A power conversion device that performs power conversion between an AC circuit and a DC circuit, the power conversion device comprising:

   a self-commutated converter connected to a busbar of the AC circuit; and
   a controller to control an operation of the self-commutated converter, wherein
   the AC circuit includes the busbar, and a first AC system and a second AC system connected to the busbar,
   a converter capacity of the self-commutated converter is greater than a differential capacity between an installed capacity and a load capacity in the second AC system,
   the controller includes

   a determination unit to determine, based on a protection signal for disconnecting the first AC system from the busbar, whether the first AC system is disconnected from the busbar, the protection signal being transmitted from a protective relay device to protect the first AC system, and
   an AC control unit to generate an AC voltage command value for the self-commutated converter in accordance with any one of an AC current control scheme and an AC voltage control scheme, and

   when the first AC system is disconnected from the busbar, the AC control unit switches a control scheme of the self-commutated converter from the AC current control scheme to the AC voltage control scheme and generates the AC voltage command value in accordance with the AC voltage control scheme.

2. The power conversion device according to claim 1, wherein the determination unit

   determines that the first AC system is disconnected from the busbar after a lapse of a prescribed time from reception of the protection signal, or
   determines that the first AC system is disconnected from the busbar when the determination unit receives the protection signal and a voltage of the busbar is not less than a first threshold.

3. The power conversion device according to claim 1 or 2, wherein the AC control unit includes

   an AC current control unit to generate a first AC voltage command value for causing an output current of the self-commutated converter to follow an AC current command value,
   an AC voltage control unit to generate a second AC voltage command value such that an AC voltage of the busbar is equal to a target voltage, and
   a command value generation unit to generate the AC voltage command value for the self-commutated converter based on a determination result of the determination unit, the first AC voltage command value, and the second AC voltage command value.

4. The power conversion device according to claim 3, wherein the command value generation unit

   generates the first AC voltage command value as the AC voltage command value when the first AC system is not disconnected from the busbar, and
   generates the second AC voltage command value as the AC voltage command value when the first AC system is disconnected from the busbar.

5. The power conversion device according to claim 3, wherein the command value generation unit

   generates the first AC voltage command value as the AC voltage command value when the first AC system is not disconnected from the busbar, and
   changes the AC voltage command value from the first AC voltage command value to the second AC voltage command value when the first AC system is disconnected from the busbar.

6. The power conversion device according to any one of claims 3 to 5, wherein the controller further includes an overcurrent suppression unit to generate a suppression amount for restricting the second AC voltage command value when the output current of the self-commutated converter becomes an overcurrent.

7. The power conversion device according to any one of claims 1 to 6, wherein

12

the controller further includes a setting unit to set an active power command value for the self-commutated converter based on a determination result of the determination unit, and

when the first AC system is disconnected from the busbar, the setting unit sets the active power command value to active power output to the second AC system before disconnection of the first AC system from the busbar.

8. The power conversion device according to any one of claims 1 to 7, wherein

the controller further includes a phase generation unit to generate a phase of an output voltage of the self-commutated converter, and

the phase generation unit

generates, as the phase of the output voltage, a first phase when the first AC system is not disconnected from the busbar, the first phase being calculated by time integration of an addition value of a reference angular frequency and an angular frequency adjustment amount for synchronizing the phase of the output voltage of the self-commutated converter with a phase of an AC voltage of the busbar, and

generates, as the phase of the output voltage, a second phase when the first AC system is disconnected from the busbar, the second phase being calculated by time integration of the reference angular frequency.

9. The power conversion device according to any one of claims 1 to 7, wherein

the controller further includes a phase generation unit to output a phase of an output voltage of the self-commutated converter, and

the phase generation unit

generates, as the phase of the output voltage of the self-commutated converter, a first phase when the first AC system is not disconnected from the busbar, the first phase being calculated by time integration of an addition value of a reference angular frequency and an angular frequency adjustment amount for synchronizing the phase of the output voltage with a phase of an AC voltage of the busbar, and

changes the phase of the output voltage from the first phase to a second phase when the first AC system is disconnected from the busbar, the second phase being calculated by time integration of the reference angular frequency.

10. The power conversion device according to any one of claims 1 to 9, wherein the self-commutated converter is a modular-multilevel-conversion power converter.

11. A power conversion system comprising:

a power conversion device to perform power conversion between an AC circuit and a DC circuit; and

a protective relay device, wherein

the power conversion device includes

a self-commutated converter connected to a busbar of the AC circuit, and

a controller to control an operation of the self-commutated converter,

the AC circuit includes the busbar, and a first AC system and a second AC system connected to the busbar,

a converter capacity of the self-commutated converter is greater than a differential capacity between an installed capacity and a load capacity in the second AC system,

the controller includes

a determination unit to determine, based on a protection signal for disconnecting the first AC system from the busbar, whether the first AC system is disconnected from the busbar, the protection signal being transmitted from the protective relay device to protect the first AC system, and

an AC control unit to generate an AC voltage command value for the self-commutated converter in accordance with any one of an AC current control scheme and an AC voltage control scheme, and

when the first AC system is disconnected from the busbar, the AC control unit switches a control scheme of the self-commutated converter from the AC current control scheme to the AC voltage control scheme and generates the AC voltage command value in accordance with the AC voltage control scheme.

FIG.1

FIG.2

FIG.3

FIG.4

FIG.5

FIG.6

FIG.7

3

79

74 CPU

76 ROM

75 RAM

77 INPUT/ OUTPUT I/F

70 INPUT CONVERTER

71 S/H

72 MUX

73 A/D

78 AUXILIARY STORAGE DEVICE

FIG.8

## INTERNATIONAL SEARCH REPORT

| International application No. |
| --- |
| **PCT/JP2021/035558** |

**A.   CLASSIFICATION OF SUBJECT MATTER**

*H02J 3/38*(2006.01)i; *H02M 7/48*(2007.01)i
FI:   H02M7/48 M; H02M7/48 R; H02M7/48 E; H02J3/38 180

According to International Patent Classification (IPC) or to both national classification and IPC

**B.   FIELDS SEARCHED**

Minimum documentation searched (classification system followed by classification symbols)

H02J3/38; H02M7/48

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2017-55508 A (HITACHI MAXELL, LTD.) 16 March 2017 (2017-03-16) entire text, all drawings | 1-11 |
| A | JP 2015-27203 A (SUMITOMO ELECTRIC IND., LTD.) 05 February 2015 (2015-02-05) entire text, all drawings | 1-11 |
| A | JP 2015-100234 A (KAWASAKI HEAVY IND., LTD.) 28 May 2015 (2015-05-28) entire text, all drawings | 1-11 |
| A | JP 2018-107991 A (KAWASAKI HEAVY IND., LTD.) 05 July 2018 (2018-07-05) entire text, all drawings | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 November 2021** | **30 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/035558**

| Patent document cited in search report | | | Publication date (day/month/year) | Patent family member(s) | | | Publication date (day/month/year) |
|---|---|---|---|---|---|---|---|
| JP | 2017-55508 | A | 16 March 2017 | (Family: none) | | | |
| JP | 2015-27203 | A | 05 February 2015 | (Family: none) | | | |
| JP | 2015-100234 | A | 28 May 2015 | WO | 2015/075923 | A1 | |
| JP | 2018-107991 | A | 05 July 2018 | US | 2019/0334352 | A1 | |
| | | | | WO | 2018/124221 | A1 | |
| | | | | EP | 3565080 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000184601 A